(19) **Europäisches Patentamt**
**European Patent Office**
**Office européen des brevets**

(11) **EP 4 391 196 A1**

(12) **EUROPEAN PATENT APPLICATION**
published in accordance with Art. 153(4) EPC

(43) Date of publication:
**26.06.2024 Bulletin 2024/26**

(21) Application number: **23747299.8**

(22) Date of filing: **25.01.2023**

(51) International Patent Classification (IPC):
$H01M\ 50/489$ (2021.01)    $H01M\ 50/449$ (2021.01)
$H01M\ 10/052$ (2010.01)    $H01M\ 4/48$ (2010.01)
$H01M\ 4/38$ (2006.01)    $H01M\ 4/04$ (2006.01)
$H01M\ 4/62$ (2006.01)

(52) Cooperative Patent Classification (CPC):
H01M 4/04; H01M 4/38; H01M 4/48; H01M 4/62;
H01M 10/052; H01M 10/058; H01M 50/449;
H01M 50/489; Y02E 60/10

(86) International application number:
**PCT/KR2023/001113**

(87) International publication number:
**WO 2023/146258 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.01.2022 KR 20220012968**

(71) Applicant: **LG Energy Solution, Ltd.
Seoul 07335 (KR)**

(72) Inventors:
• **YOUN, Suk Il
Daejeon 34122 (KR)**
• **HONG, Yeon Suk
Daejeon 34122 (KR)**

(74) Representative: **Hoffmann Eitle
Patent- und Rechtsanwälte PartmbB
Arabellastraße 30
81925 München (DE)**

(54) **LITHIUM SECONDARY BATTERY COMPRISING SEPARATOR**

(57) The present application relates to a separator for a lithium secondary battery, and a lithium secondary battery including the same.

[Figure 1]

EP 4 391 196 A1

**Description**

[Technical Field]

This application claims priority to and the benefit of Korean Patent Application No. 10-2022-0012968 filed in the Korean Intellectual Property Office on January 28, 2022, the entire contents of which are incorporated herein by reference.

The present application relates to a lithium secondary battery including a separator.

[Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, according to the demand for high density energy batteries in recent years, research is being actively conducted on a method for increasing a capacity by using together a silicon-based compound such as Si/C and SiOx having a capacity 10 times or higher than that of a graphite-based material, as a negative electrode active material. However, as compared to graphite that is typically used, a silicon-based compound that is a high capacity material has a large capacity but undergoes rapid volume expansion during charging, thereby disconnecting a conductive path to degrade battery characteristics.

In addition, the silicon-based negative electrode undergoes a carbonization process, and in this case, 50% or more of the negative electrode binder included in the silicon-based negative electrode is lost, resulting in a very rough surface. That is, in the process of carbonizing the silicon-based negative electrode, a surface of the silicon-based negative electrode becomes very rough, and as a result, the negative electrode punctures the separator to come into contact with the positive electrode, thereby generating micro shorts.

Therefore, in order to address the problem occurring when using a silicon-based compound as a negative electrode active material, a method of adding a coating layer on a surface of the separator, a method of changing a material of the separator, etc. are being studied as solutions, but a suitable solution is not currently available.

Therefore, there is a need for research on a separator capable of withstanding the pressure and roughness when the separator is compressed due to expansion of the silicon-based negative electrode having a rough surface during charging and discharging.

[Citation List]

Japanese Patent Laid-open Application Publication No. 2009-080971

[Detailed Description of the Invention]

[Technical Problem]

As a result of research on a separator capable of withstanding the pressure and roughness when the separator is compressed due to the expansion of the silicon-based negative electrode having a rough surface during charging and discharging, it has been found by the research that the above problems can be solved when adjusting physical properties of the separator itself, and accordingly, the present application relates to a lithium secondary battery including a separator satisfying specific conditions.

[Technical Solution]

An exemplary embodiment of the present specification provides a lithium secondary battery including: a silicon-based negative electrode; a positive electrode; a separator positioned between the negative electrode and the positive electrode; and an electrolyte, in which the silicon-based negative electrode includes a negative electrode current collector layer, and a negative electrode active material layer including a negative electrode active material layer composition provided on one surface or both surfaces of the negative electrode current collector layer, in which the negative electrode active material layer composition includes one or more selected from the group consisting of a silicon-based active material, a negative electrode conductive material, and a negative electrode binder, in which the silicon-based active material includes one or more selected from the group consisting of SiOx (x=0) and SiOx (0<x<2), and includes the SiOx (x=0) in an amount of 70 parts by weight or more on the basis of 100 parts by weight of the silicon-based active material, and in which the separator satisfies a thickness of 1 um or greater and 15 $\mu$m or less, and has a compression resistance of 1% or greater and 14.5% or less defined by Equation 1 below, and a dielectric breakdown voltage of 400V or higher.

$$[Equation\ 1]$$

$$(T1-T2)\ /\ T1\ X\ 100$$

in Equation 1,

T1 refers to an initial thickness in a state in which the separator is stacked in three sheets,
T2 refers to a thickness after stacking the separator in three sheets and pressing them at 2000 kgf and 70°C for 10 seconds with a hot press (QM-940A Grade available from Q-mesys), and
the dielectric breakdown voltage refers to a voltage at a time of dielectric breakdown while stepping up a monocell including the separator from 0V to 6000V at a rate of 100V/s with Hipot tester (AC/DC/IR Tester) available from Chroma.

[Advantageous Effects]

According to the lithium secondary battery of the exemplary embodiment of the present invention, the silicon-based negative electrode is used and the separator satisfies all of the three parameters, i.e., the thickness of 1 um to 15 um, the compression resistance of 1% or greater and 14.5% or less defined by Equation 1 and the dielectric breakdown voltage of 400V or higher so that the separator can maintain a robust shape even when the rough negative electrode surface comes into contact with the separator due to volume expansion of the silicon-based negative electrode during charging and discharging.
That is, for the lithium secondary battery of the present application, the three parameters defined by the thickness range, the dielectric breakdown voltage, and the compression resistance of the separator are set to the appropriate ranges, resulting in addressing the existing problems occurring in lithium secondary batteries using silicon-based negative electrodes.

[Brief Description of Drawings]

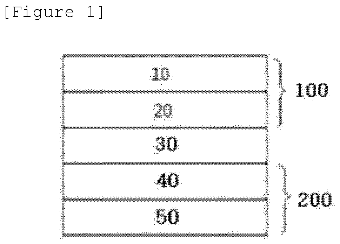

FIG. 1 shows a laminated structure of a lithium secondary battery according to an exemplary embodiment of the present application.

<Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary Battery

[Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount under liquid nitrogen temperature (77K) by using BELSORP-mini II of BEL Japan. That is, in the present application, the BET specific surface area may refer to the specific surface area measured by the above measurement method.

In the present specification, "Dn" refers to a particle size distribution, and refers to a particle diameter at the n% point in the cumulative distribution of the number of particles according to the particle diameter. That is, D50 is a particle diameter (center particle diameter, average particle diameter) at the 50% point in the cumulative distribution of the number of particles according to the particle diameter, D90 is a particle diameter at the 90% point in the cumulative distribution of the number of particles according to the particle diameter, and D10 is a particle diameter at the 10% point in the cumulative distribution of the number of particles according to the particle diameter. Meanwhile, the particle size distribution may be measured using a laser diffraction method. Specifically, powders to be measured are dispersed in a dispersion medium, which is then introduced into a commercially available laser diffraction particle size measurement apparatus (for example, Microtrac S3500) in which a difference in diffraction patterns according to the particle size is measured, when a laser beam passes through particles, and then a particle size distribution is calculated.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight. In the present specification, a molecular weight refers to a weight-average molecular weight unless particularly described otherwise.

Hereinafter, exemplary embodiments of the present invention will be described in detail with reference to the drawings so that one skilled in the art can readily implement the present invention. However, the present invention may be embodied in various different forms, and is not limited to the following descriptions.

An exemplary embodiment of the present specification provides a lithium secondary battery including: a silicon-based negative electrode; a positive electrode; a separator positioned between the negative electrode and the positive electrode; and an electrolyte, in which the silicon-based negative electrode includes a negative electrode current collector layer, and a negative electrode active material layer including a negative electrode active material layer composition provided on one surface or both surfaces of the negative electrode current collector layer, in which the negative electrode active material layer composition includes one or more selected from the group consisting of a silicon-based active material, a negative electrode conductive material, and a negative electrode binder, in which the silicon-based active material includes one or more selected from the group consisting of SiOx (x=0) and SiOx (0<x<2), and includes the SiOx (x=0) in an amount of 70 parts by weight or more on the basis of 100 parts by weight of the silicon-based active material, and in which the separator satisfies a thickness of 1 um or greater and 15 $\mu$m or less, and has a compression resistance of 1% or greater and 14.5% or less defined by Equation 1 below, and a dielectric breakdown voltage of 400V or higher.

$$[Equation\ 1]$$

$$(T1-T2)\ /\ T1\ X\ 100$$

in Equation 1,

T1 refers to an initial thickness in a state in which the separator is stacked in three sheets,
T2 refers to a thickness after stacking the separator in three sheets and pressing them at 2000 kgf and 70°C for 10 seconds with a hot press (QM-940A Grade available from Q-mesys), and
the dielectric breakdown voltage refers to a voltage at a time of dielectric breakdown while stepping up a monocell including the separator from 0V to 6000V at a rate of 100V/s with Hipot tester (AC/DC/IR Tester) available from Chroma.

The separator according to an exemplary embodiment of the present invention satisfies all of the three parameters, i.e., the thickness of 1 um or greater and 15 $\mu$m or less, the compression resistance of 1% or greater and 14.5% or less defined by Equation 1 and the dielectric breakdown voltage of 400V or higher, so that the separator can maintain a robust shape even when the rough negative electrode surface comes into contact with the separator due to volume expansion of the silicon-based negative electrode during charging and discharging.

FIG. 1 shows a laminated structure of a lithium secondary battery according to an exemplary embodiment of the present application. Specifically, a negative electrode 100 for a lithium secondary battery including a negative electrode active material layer 20 on one surface of a negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a laminated structure with a separator 30 interposed therebetween.

Hereinafter, the silicon-based negative electrode, which is one of the features of the present invention, will be described.

In an exemplary embodiment of the present application, the silicon-based negative electrode includes a negative electrode current collector layer; and a negative electrode active material layer including a negative electrode active material layer composition provided on one surface or both surfaces of the negative electrode current collector layer, in which the negative electrode active material layer composition includes one or more selected from the group consisting of a silicon-based active material, a negative electrode conductive material, and a negative electrode binder.

In an exemplary embodiment of the present application, there is provided the lithium secondary battery in which the silicon-based active material includes one or more selected from the group consisting of SiOx (x=0) and SiOx (0<x<2), and includes the SiOx (x=0) in an amount of 70 parts by weight or more on the basis of 100 parts by weight of the silicon-based active material.

In another exemplary embodiment, on the basis of 100 parts by weight of the silicon-based active material, SiOx (x = 0) may be included in an amount of 70 parts by weight or more, preferably 80 parts by weight or more, and more preferably 90 parts by weight or more, and 100 parts by weight or less, preferably 99 parts by weight or less, and more preferably 95 parts by weight or less.

In an exemplary embodiment of the present application, the silicon-based active material may particularly use pure silicon (Si) as the silicon-based active material. The use of pure silicon (Si) as the silicon-based active material may mean that, on the basis of 100 parts by weight of the total silicon-based active material as described above, pure Si particles (SiOx (x=0)) not bonded to other particles or elements are included within the above range.

The capacity of the silicon-based active material is significantly higher than that of a graphite-based active material that is typically used, so that there have been more attempts to apply the same. However, the volume expansion rate of the silicon-based active material during charging/discharging is high, so that only a small amount thereof is mixed with a graphite-based active material for use.

In addition, since a surface of the active material included in the silicon-based negative electrode is very rough, as compared with a carbon-based negative electrode, the active material punctures the separator to come into contact with the positive electrode, thereby generating micro shorts. However, according to the lithium secondary battery of the present application, even when the negative electrode having a very rough surface as described above is used, physical properties of the separator described later are adjusted to secure excellent capacity characteristics and energy density and to prevent micro shorts.

An average particle diameter (D50) of the silicon-based active material of the present invention may be 5 um to 10 um, specifically 5.5 um to 8 $\mu$m, and more specifically 6 um to 7 um. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value, a contact area between the silicon particles and the conductive material is excellent due to the composite made of the conductive material and the negative electrode binder in the negative electrode slurry, so that a possibility of sustaining conductive network increases, thereby increasing the capacity retention rate. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In an exemplary embodiment of the present application, the silicon-based active material generally has a characteristic BET specific surface area. The BET specific surface area of the silicon-based active material is preferably 0.01 to 150.0 m²/g, more preferably 0.1 to 100.0 m²/g, particularly preferably 0.2 to 80.0 m²/g, and most preferably 0.2 to 18.0 m²/g. The BET specific surface area is measured in accordance with DIN 66131 (using nitrogen).

In an exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In an exemplary embodiment of the present application, the silicon-based active material may be included in an amount of 60 parts by weight or more, on the basis of 100 parts by weight of the negative electrode active material layer composition.

In another exemplary embodiment the silicon-based active material may be included in an amount of 60 parts by weight or more, preferably 65 parts by weight or more, and more preferably 70 parts by weight or more, and 95 parts by weight or less, preferably 90 parts by weight or less, and more preferably 80 parts by weight or less on the basis of 100 parts by weight of the negative electrode active material layer composition.

The negative electrode active material layer composition according to the present application uses the specific conductive material and binder capable of controlling the volume expansion rate during charging and discharging even when the silicon-based active material having a significantly high capacity is used within the above range. Accordingly, even when the silicon-based active material is within the above range, the negative electrode active material layer composition does not degrade the performance of the negative electrode and has excellent output characteristics in charging and discharging.

In an exemplary embodiment of the present application, the silicon-based active material may have a non-spherical shape and its sphericity is, for example, 0.9 or less, for example, 0.7 to 0.9, for example 0.8 to 0.9, and for example 0.85 to 0.9.

In the present application, the sphericity (circularity) is determined by Equation A-1, in which A is an area and P is a boundary line.

$$[\text{Equation A-1}]$$

$$4\pi A/P^2$$

In the related art, it is general to use only graphite-based compounds as the negative electrode active material. However, in recent years, as the demand for high-capacity batteries is increasing, attempts to mix and use silicon-based compounds are increasing in order to increase capacity. However, the silicon-based compounds have limitations in that the volume rapidly expands during the charging/discharging, resulting in damage to the conductive path formed in the negative electrode active material layer to degrade the performance of the battery.

Accordingly, in an exemplary embodiment of the present application, the negative electrode conductive material may include one or more selected from the group consisting of a particulate conductive material, a linear conductive material, and a planar conductive material.

In an exemplary embodiment of the present application, the particulate conductive material refers to a conductive material that may be used for improving conductivity of the negative electrode, has conductivity without causing a chemical change and has a spherical or point shape. Specifically, the particulate conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In an exemplary embodiment of the present application, the particulate conductive material may have a BET specific surface area of 40 m²/g or greater and 70 m²/g or less, preferably 45 m²/g or greater and 65 m²/g or less, and more preferably 50 m²/g or greater and 60 m²/g or less.

In an exemplary embodiment of the present application, a functional group content (volatile matter) of the particulate conductive material may satisfy a range of 0.01% or more and 0.05% or less, preferably 0.01% or more and 0.04% or less, and more preferably 0.01% or more and 0.03% or less.

Specifically, as the dispersibility of the particulate conductive material is improved, even when the content of the particulate conductive material is increased in the negative electrode slurry having the same solid content, the viscosity of the negative electrode slurry can be maintained at an appropriate level, so that processibility is stable and uniformity of the negative electrode to be formed can be improved.

In an exemplary embodiment of the present application, the particle diameter of the particulate conductive material may be 10 nm to 100 nm, preferably 20 nm to 90 nm, and more preferably 20 nm to 60 nm.

In an exemplary embodiment of the present application, the conductive material may include a planar conductive material.

The planar conductive material can serve to improve conductivity by increasing surface contact between silicon particles in the negative electrode, and at the same time, to suppress the disconnection of the conductive path due to the volume expansion, and may be expressed as a plate-like conductive material or a bulk-type conductive material.

In an exemplary embodiment of the present application, the planar conductive material may include at least one selected from the group consisting of plate-like graphite, graphene, graphene oxide, and graphite flakes, and preferably may be plate-like graphite.

In an exemplary embodiment of the present application, the average particle diameter (D50) of the planar conductive material may be 2 um to 7 um, specifically 3 um to 6 $\mu$m, and more specifically 4 um to 5 um. When the above range is satisfied, the sufficient particle size results in easy dispersion without causing an excessive increase in viscosity of the negative electrode slurry. Therefore, the dispersion effect is excellent when dispersing using the same equipment and time.

In an exemplary embodiment of the present application, there is provided the negative electrode composition in which the planar conductive material has D10 of 0.5 um or greater and 1.5 $\mu$m or less, D50 of 2.5 um or greater and 3.5 um or less and D90 of 7.0 um or greater and 15.0 $\mu$m or less.

In an exemplary embodiment of the present application, for the planar conductive material, a planar conductive material with a high specific surface area having a high BET specific surface area or a planar conductive material with a low specific surface area may be used.

In an exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In an exemplary embodiment of the present application, the planar conductive material may have a BET specific surface area of 5 m$^2$/g or greater.

In another exemplary embodiment, the planar conductive material may have a BET specific surface area of 5 m$^2$/g or greater and 500m$^2$/g or less, preferably 5 m$^2$/g or greater and 300 m$^2$/g or less, and more preferably 5 m$^2$/g or greater and 250 m$^2$/g or less.

In another exemplary embodiment, the planar conductive material is a planar conductive material with a high specific surface area, and the BET specific surface area may satisfy a range of 50 m$^2$/g or greater and 500 m$^2$/g or less, preferably 80 m$^2$/g or greater and 300 m$^2$/g or less, and more preferably 100 m$^2$/g or greater and 300 m$^2$/g or less.

In another exemplary embodiment, the planar conductive material is a planar conductive material with a low specific surface area, and the BET specific surface area may satisfy a range of 5 m$^2$/g or greater and 40 m$^2$/g or less, preferably 5 m$^2$/g or greater and 30 m$^2$/g or less, and more preferably 5 m$^2$/g or greater and 25 m$^2$/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side in such an orientation that longitudinal axes of the carbon nanotube units are substantially the same, or are entangled. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In an exemplary embodiment of the present application, the negative electrode conductive material may include a linear conductive material and the linear conductive material may be carbon nanotubes.

In an exemplary embodiment of the present application, the carbon nanotubes may be SWCNT or/and MWCNT. When the linear conductive material is SWCNT, a length of the SWCNT may be 0.5 um to 100 $\mu$m, and preferably 1 um to 80 um.

In an exemplary embodiment of the present application, the negative electrode conductive material may be included in an amount of 10 parts by weight or more and 40 parts by weight or less, on the basis of 100 parts by weight of the negative electrode active material layer composition.

In another exemplary embodiment, the negative electrode conductive material may be included in an amount of 10 parts by weight or more and 40 parts by weight or less, preferably 10 parts by weight or more and 30 parts by weight or less, and more preferably 10 parts by weight or more and 20 parts by weight or less, on the basis of 100 parts by weight of the negative electrode active material layer composition.

The negative electrode conductive material according to the present application has a completely different configuration from a conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving as a buffer at the time of rollpressing, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and are completely different from the negative electrode conductive material that is applied together with the silicon-based active material as in the present invention, in terms of configuration and role.

In an exemplary embodiment of the present application, the plate-like conductive material that is used as the negative electrode conductive material described above has a different structure and role from those of the carbon-based active material that is generally used as the negative electrode active material. Specifically, the carbon-based active material that is used as the negative electrode active material may be artificial graphite or natural graphite, and refers to a material that is processed into a spherical or particulate shape and used so as to facilitate storage and release of lithium ions.

On the other hand, the planar (plate-like) conductive material that is used as the negative electrode conductive material is a planar or plate-like material, and may be expressed as plate-like graphite. That is, the planar conductive material is a material that is included so as to maintain a conductive path in the negative electrode active material layer, and refers to a material for securing a conductive path in a planar shape inside the negative electrode active material layer, rather than playing a role in storing and releasing lithium.

That is, in the present application, the use of the planar (plate-like) graphite as a conductive material means that graphite is processed into a planar or plate-like shape and used as a material for securing a conductive path rather than playing a role in storing or releasing lithium. In this case, the negative electrode active material included together has high capacity characteristics with respect to storing and releasing lithium, and serves to store and release all lithium ions transferred from the positive electrode.

On the other hand, in the present application, the use of a carbon-based active material as an active material means that the carbon-based active material is processed into a point or spherical shape and used as a material for storing or releasing lithium.

That is, in an exemplary embodiment of the present application, artificial graphite or natural graphite, which is a carbon-based active material, has a particulate shape, and a BET specific surface area thereof may satisfy a range of 0.1 $m^2$/g or greater and 4.5 $m^2$/g or less. In addition, plate-like graphite, which is a planar conductive material, has a planar shape, and a BET specific surface area thereof may be 5 $m^2$/g or greater.

In an exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinylalcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder according to the exemplary embodiment of the present application serves to hold the active material and the conductive material in order to prevent distortion and structural deformation of the negative electrode structure in volume expansion and relaxation of the silicon-based active material. When such roles are satisfied, all of the general binders can be applied. Specifically, a water-based binder may be used, and more specifically, a PAM-based binder may be used.

In an exemplary embodiment of the present application, the negative electrode binder may be included in an amount of 30 parts by weight or less, preferably 25 parts by weight or less, more preferably 20 parts by weight or less, and 5 parts by weight or more, preferably 10 parts by weight or more, on the basis of 100 parts by weight of the negative electrode active material layer composition.

In an exemplary embodiment of the present application, the negative electrode current collector layer generally has a thickness of 1 $\mu$m to 100 um. The negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In an exemplary embodiment of the present application, there is provided the lithium secondary battery in which a thickness of the negative electrode current collector layer is 1 um or greater and 100 um or less and a thickness of the negative electrode active material layer is 10 um or greater and 100 $\mu$m or less.

In an exemplary embodiment of the present application, there is provided the lithium secondary battery in which the thickness of the negative electrode active material layer is 10 um or greater and 100 $\mu$m or less.

However, the thicknesses may be various modified depending on a type and use of the negative electrode used, and are not limited thereto.

In an exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, conductive material and binder included in the negative electrode active material layer, and in particular, satisfies the range of the porosity described above when the silicon-based active material and the conductive material according to the present application are included in the specific compositions and contents, so that the electrode has appropriate ranges of electrical conductivity and resistance.

The separator according to the present application satisfies all of the three conditions described above, and each condition will be described below.

The separator according to an exemplary embodiment of the present specification satisfies a thickness of 1 um or greater and 15 $\mu$m or less.

The separator according to another exemplary embodiment may satisfy a thickness of 1 um or greater and 15 um or less, preferably 3 um or greater and 15 um or less, more preferably 6 um or greater and 15 um or less, and 10 um or greater and 15 um or less.

The thickness of the separator may refer to a thickness of one sheet when one sheet is used, and a total thickness range including thicknesses of two or more sheets when two or more sheets are used.

When the thickness of the separator satisfies the above range, damage to the separator can be minimized even if contact occurs during expansion of a silicon-based negative electrode having a rough surface. If the thickness is below the range, the separator may be punctured due to expansion of the negative electrode even when the conditions of the compression resistance and the dielectric breakdown voltage described below are satisfied. If the thickness is above the range, lithium ion exchange between the positive electrode and the negative electrode may not be smoothly performed, resulting in defects in the lithium secondary battery.

In an exemplary embodiment of the present application, the compression resistance of the separator defined by Equation 1 below may satisfy a range of 1% or greater and 14.5% or less.

$$[Equation\ 1]$$

$$(T1-T2)\ /\ T1\ X\ 100$$

in Equation 1,

T1 refers to an initial thickness in a state in which the separator is stacked in three sheets,
T2 refers to a thickness after stacking the separator in three sheets and pressing them at 2000 kgf and 70°C for 10 seconds with a hot press (QM-940A Grade available from Q-mesys).

In another exemplary embodiment, the compression resistance defined by Equation 1 may satisfy a range of 1% or greater and 14.5% or less, 5% or greater and 14.5% or less, 10% or more and 14.5% or less, or 10.5% or greater and 14.5% or less.

In an exemplary embodiment of the present application, the compression resistance of Equation 1 may refer to a ratio of a thickness after a pressure is applied to the separator under a certain range of conditions and a thickness when no pressure is applied, and the low compression resistance may mean that the separator is less pressed.

When the compression resistance satisfies the above range, the durability of the separator is increased. If the compression resistance is below the above range, the separator does not respond flexibly to the negative electrode having a rough surface, resulting in breakage or puncture of the separator. If the compression resistance exceeds the above range, the separator is too robust, making it difficult for lithium ions to pass therethrough, which may cause an increase in diffusion resistance.

In addition, a separator composed of only an inorganic material layer without polymers, such as PE or PP, is evaluated very low for the compression resistance. In this case, the separator becomes in a state of being little compressed, so that the pores of the separator remain at an initial state, as they are. As a result, the passing of lithium ions becomes smooth during charging and discharging and the diffusion resistance does not increase any more.

In an exemplary embodiment of the present application, the dielectric breakdown voltage of the separator may be 400 V or higher.

In another exemplary embodiment, the dielectric breakdown voltage of the separator may satisfy a range of 400 V or higher, and preferably 450 V or higher, and may satisfy a range of 6000 V or lower, and preferably 5000 V or lower, or a range of 2000 V or lower.

The dielectric breakdown voltage refers to a voltage at a time of dielectric breakdown when stepping up a monocell including the separator from 0 V to 6000 V at a rate of 100 V/s with Hipot tester (AC/DC/IR Tester) available from Chroma, and may mean that the higher the measured voltage is, the separator can withstand a higher voltage.

When the dielectric breakdown voltage satisfies the above range, the durability of the separator is increased. If the dielectric breakdown voltage is below the above range, the separator may be broken or punctured by the negative electrode having a rough surface. The fact that the dielectric breakdown voltage is measured means that electric charges flow, and if the dielectric breakdown voltage is below the lower limit of the range as described above, it may be determined that a short has occurred.

That is, the separator according to the present application is characterized in that only when all of the three conditions described above are satisfied, the lithium secondary battery can be driven without damage to the separator despite the volume expansion of the silicon-based negative electrode having a rough surface.

In an exemplary embodiment of the present application, the compression resistance and the dielectric breakdown voltage may be made to satisfy the above ranges by adjusting a molecular weight and an internal pore distribution of the separator.

Specifically, the higher the molecular weight of the material constituting the separator is, the higher the compression resistance and dielectric breakdown voltage are. Regarding this, the separator according to the present application satisfies the ranges of the compression resistance and dielectric breakdown voltage by adjusting the molecular weight and, at the same time, the thickness in order to satisfy the above ranges.

In addition, the pore distribution is adjusted together in order to satisfy the ranges of the compression resistance and dielectric breakdown voltage. In general, when pores of the separator having a level of 10 nm or greater are uniformly distributed, the ranges of the compression resistance and dielectric breakdown voltage can be adjusted to the above ranges.

That is, the separator according to the present application is characterized in that the compression resistance and the dielectric breakdown voltage are satisfied by adjusting the molecular weight range, the internal pore distribution, and the thickness range to suitable ranges.

In an exemplary embodiment of the present application, a weight average molecular weight of the separator may include a range of 1,000,000 g/mol or more and 10,000,000 g/mol or less.

In another exemplary embodiment, the weight average molecular weight of the separator may satisfy a range of 1,000,000 g/mol or more and 10,000,000 g/mol or less, preferably 1,000,000 g/mol or more and 9,000,000 g/mol or less, and more preferably 1,000,000 g/mol or more and 8,000,000 g/mol or less.

In addition, in an exemplary embodiment of the present application, a pore size of the separator may satisfy a range of 10 nm or greater and 100 nm or smaller, and specifically, 20 nm or greater and 60 nm or smaller, and the distribution may be appropriately adjusted according to the size of the pores, thereby adjusting the compression resistance and the dielectric breakdown voltage.

As an example, in a separator having pores of 40 nm and a separator having pores in a level of 20 nm, when the distribution of pores in the separator having pores in the level of 20 nm is made uniform, the compression resistance and dielectric breakdown voltage can be increased.

In an exemplary embodiment of the present application, there is provided the separator for a lithium secondary battery in which the separator is a wet separator, or a dry separator.

The wet separator and the dry separator may be classified according to differences in the process itself.

Specifically, the wet separator may be obtained by extruding a mixture of polyethylene and paraffin, and passing the mixed film through methylene chloride (MC) to melt the paraffin. In this case, polyethylene is not dissolved in methylene chloride (MC), and pores are created at sites where the paraffin is melted, resulting in the wet separator.

The dry separator may be manufactured in a manner of extruding a polypropylene polymer into a film and then stretching the film to create gaps between polymer chains.

In an exemplary embodiment of the present application, there is provided the separator for a lithium secondary battery in which the separator includes one or more selected from the group consisting of a porous polymer film, a porous non-woven fabric, and a ceramic component.

Specifically, the separator serves to separate the negative electrode and the positive electrode and to provide a movement path of lithium ions, in which any separator may be used as the separator without particular limitation as long as it is typically used in a secondary battery, and particularly, a separator having high moisture-retention ability for

## EP 4 391 196 A1

an electrolyte solution as well as a low resistance to the movement of electrolyte solution ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

That is, when the separator of the present application falls within the ranges that satisfy the three parameters described above, the separator may be used without limitation in terms of types.

In an exemplary embodiment of the present application, the separator may include a single layer or two or more layers.

In an exemplary embodiment of the present application, the positive electrode may include a positive electrode current collector layer and a positive electrode active material layer formed on the positive electrode current collector layer and including the positive electrode active material.

In the positive electrode, the positive electrode current collector layer is not particularly limited as long as it has conductivity without causing a chemical change in the battery. For example, stainless steel, aluminum, nickel, titanium, fired carbon, aluminum or stainless steel each surface-treated with carbon, nickel, titanium, silver, or the like, or the like may be used. In addition, the positive electrode current collector layer may typically have a thickness of 3 to 500 um, and a surface of the current collector may be formed with microscopic irregularities to enhance adhesive force of the positive electrode active material. For example, the positive electrode current collector layer may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide ($LiCoO_2$) and a lithium nickel oxide ($LiNiO_2$), or a compound substituted with one or more transition metals; a lithium iron oxide such as $LiFe_3O_4$; a lithium manganese oxide such as chemical formula $Li_{1+c1}Mn_{2-c1}O_4(0 \leq c1 \leq 0.33)$, $LiMnO_3$, $LiMn_2O_3$ and $LiMnO_2$; a lithium copper oxide ($Li_2CuO_2$); a vanadium oxide such as $LiV_3O_8$, $V_2O_5$ and $Cu_2V_2O_7$; a Ni-site type lithium nickel oxide represented by chemical formula $LiNi_{1-c2}M_{c2}O_2$ (where M is at least one selected from the group consisting of Co, Mn, Al, Cu, Fe, Mg, B, and Ga, and satisfies $0.01 \leq c2 \leq 0.3$); a lithium manganese composite oxide represented by chemical formula $LiMn_{2-c3}M_{c3}O_2$ (where M is at least one selected from the group consisting of Co, Ni, Fe, Cr, Zn and Ta, and satisfies $0.01 \leq c3 \leq 0.1$) or $Li_2Mn_3MO_8$ (where M is at least one selected from the group consisting of Fe, Co, Ni, Cu and Zn); $LiMn_2O_4$ in which a part of Li of the chemical formula is substituted with an alkaline earth metal ion, or the like, but is not limited thereto. The positive electrode may be Li metal.

In an exemplary embodiment of the present application, there is provided the lithium secondary battery in which the positive electrode includes one or more selected from the group consisting of $LiNi_xCo_yMn_zO_2$ (x+y+z=1); $LiNi_aCo_bMn_cAl_dO_2$ (a+b+c+d=1); $LiMn_2O_4$; $LiNi_{0.5}Mn_{1.5}O_2$; and $LiM_xFe_yPO_4$(M: transition metal, x+y=1).

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve adhesion between particles of the positive electrode active material and adhesive force between the positive electrode active material and the positive electrode current collector layer. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

Examples of the electrolyte solution may include an organic liquid electrolyte solution, an inorganic liquid electrolyte solution, a solid polymer electrolyte solution, a gel-type polymer electrolyte solution, a solid inorganic electrolyte solution, a molten-type inorganic electrolyte solution and the like that may be used in the manufacturing of the lithium secondary battery, but are not limited thereto.

Specifically, the electrolyte solution may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte solution and having high electric conductivity may be prepared, and therefore, may be more preferably used.

A lithium salt may be used as the metal salt, and the lithium salt is a material that is readily soluble in the non-aqueous electrolyte solution, in which, for example, one or more species selected from the group consisting of $F^-$, $Cl^-$, $I^-$, $NO_3^-$, $N(CN)_2^-$, $BF_4^-$, $ClO_4^-$, $PF_6^-$, $(CF_3)_2PF_4^-$, $(CF_3)_3PF_3^-$, $(CF_3)_4PF_2^-$, $(CF_3)_5PF^-$, $(CF_3)_6P^-$, $CF_3SO_3^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$ and $(CF_3CF_2SO_2)_2N^-$ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte solution for the purpose of improving lifetime characteristics of the battery, suppressing a decrease in battery capacity, improving discharge capacity of the battery, and the like, in addition to the above-described electrolyte solution components.

An exemplary embodiment of the present invention provides a battery module including the secondary battery as a unit cell, and a battery pack including the same. Since the battery module and the battery pack include the secondary battery having high capacity, high rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

[Mode for Invention]

Hereinafter, preferred examples will be provided for better understanding of the present invention. It will be apparent to one skilled in the art that the examples are only provided to illustrate the present invention and various modifications and alterations are possible within the scope and technical spirit of the present invention. Such modifications and alterations naturally fall within the scope of claims included herein.

**<Manufacture Example>**

**<Manufacture of Negative Electrode>**

Si slurry was manufactured by mixing inorganic Si (Wacker), polyacrylamide (Aldrich), and conductive material (Super-C, Immerys) in a ratio of 7:2:1 to a concentration of 34 wt.% in DI water.

The slurry was applied to both surfaces of an 8 $\mu$mthick Cu foil (SK Nexilis), which was then press-rolled to manufacture a negative electrode having a total negative electrode thickness of 53 $\mu$m.

**<Manufacture of Positive Electrode>**

A positive electrode slurry having a solid substance concentration of 75.5% was manufactured by mixing an NCMA positive electrode material (HN803 Grade available from LG Chem) and a PVdF binder (KF9709 available from Arkema) in a ratio of 97.74:2.26 in an NMP solvent.

The positive electrode slurry was applied to both surfaces of a 12 $\mu$m-thick Al foil (A1100 grade available from Sama Aluminum), which was then press-rolled to manufacture a positive electrode having a final positive electrode thickness of 142 um.

A monocell was assembled in the order of positive electrode/separator/negative electrode/separator with the negative electrode and positive electrode manufactured above and a separator satisfying the physical properties of Table 1 below.

[Table 1]

| | Example 1 | Example 2 | Example 3 | Example 4 | Comparative Example 1 | Comparati ve Example 2 |
|---|---|---|---|---|---|---|
| Web thickness ($\mu$m) | 14.6 | 12.1 | 11.2 | 11.9 | 11.5 | 9.2 |
| Compression resistance (%) | 14.5 | 12.4 | 10.5 | 11.0 | 14.8 | 15.0 |
| Dielectric breakdown voltage (V) | 1526 | 484 | 495 | 452 | 325 | 198 |

In Table 1, the compression resistance and dielectric breakdown voltage can be measured as follows.

**- Compression resistance (%)**

The thickness (T1) after stacking the three separators in Table 1 was measured, the thickness (T2) after pressing the separators at 2000 kgf and 70°C for 10 seconds with a hot press (QM-940A Grade available from Q-MESYS) was measured, and the calculation was performed according to Equation 1 above.

**- Dielectric breakdown voltage (V)**

For the dielectric breakdown voltages of Table 1, the voltages at the time of dielectric breakdown while stepping up the monocells of Examples 1 to 4 and Comparative Examples 1 and 2 including the separator from 0V to 6000V at a rate of 100V/s with Hipot tester (AC/DC/IR Tester) available from Chroma were measured.

For the monocells of Examples 1 to 4 and Comparative Examples 1 and 2 manufactured as described above, the presence or absence of a short was observed with an AC resistance measuring device. Specifically, the 20 monocells were fabricated for which it was confirmed whether a short occurred. When a short occurred, it was marked as Fail. The results are shown in Table 2 below.

[Table 2]

| | Example 1 | Example 2 | Example 3 | Example 4 | Comparative Example 1 | Comparative Example 2 |
|---|---|---|---|---|---|---|
| Short evaluation (Fail/Test) | 0/ 20 | 0/ 20 | 1/ 20 | 2/ 20 | 8/ 20 | 18/ 20 |

As can be seen in Tables 1 and 2, the separators for a lithium secondary battery according to Examples 1 to 4 satisfied all of the three parameters, i.e., the thickness of 1 um or greater and 15 $\mu$m or less, the compression resistance of 1% or greater and 14.5% or less defined by Equation 1 and the dielectric breakdown voltage of 400V or higher, and therefore, could maintain a robust shape even when the rough negative electrode surface came into contact with the separators due to volume expansion of the silicon-based negative electrode during charging and discharging, which could be confirmed through the test in Table 2.

In the case of Comparative Example 1 and Comparative Example 2, it could be confirmed that the compression resistance was out of the range according to the present application, and therefore, the separator was too robust and it was difficult for lithium ions to pass therethrough, so that the diffusion resistance increased, and in the short evaluation, the result was not so good as the Examples.

In addition, in the case of Comparative Example 2, it could be confirmed that the dielectric breakdown voltage was out of the range according to the present application (below the lower limit of the range), the durability of the separator was poor, the separator was broken or punctured by the negative electrode having a rough surface, and as a result, the Fail result occurred most in the short evaluation.

**Claims**

1. A lithium secondary battery comprising:

a silicon-based negative electrode;

a positive electrode;

a separator located between the negative electrode and the positive electrode; and

an electrolyte,

wherein the silicon-based negative electrode comprises a negative electrode current collector layer, and a negative electrode active material layer including a negative electrode active material layer composition provided on one surface or both surfaces of the negative electrode current collector layer,

wherein the negative electrode active material layer composition comprises one or more selected from the group consisting of a silicon-based active material, a negative electrode conductive material, and a negative electrode binder,

wherein the silicon-based active material comprises one or more selected from the group consisting of SiOx (x=0) and SiOx (0<x<2), and comprises the SiOx (x=0) in an amount of 70 parts by weight or more on the basis of 100 parts by weight of the silicon-based active material, and

wherein the separator satisfies a thickness of 1 um or greater and 15 $\mu$m or less, and has a compression resistance of 1% or greater and 14.5% or less defined by Equation 1 below, and a dielectric breakdown voltage of 400V or higher.

$$[\text{Equation 1}]$$

$$(T1-T2) \; / \; T1 \; X \; 100$$

in Equation 1,

T1 refers to an initial thickness in a state in which the separator is stacked in three sheets,

T2 refers to a thickness after stacking the separator in three sheets and pressing them at 2000 kgf and 70°C for 10 seconds with a hot press (QM-940A Grade available from Q-mesys), and

the dielectric breakdown voltage refers to a voltage at a time of dielectric breakdown while stepping up a monocell including the separator from 0V to 6000V at a rate of 100V/s with Hipot tester (AC/DC/IR Tester) available from Chroma.

2. The lithium secondary battery of claim 1, wherein the separator is a wet separator or a dry separator.

3. The lithium secondary battery of claim 1, wherein the separator comprises one or more selected from the group consisting of a porous polymer film, a porous non-woven fabric, and a ceramic component.

4. The lithium secondary battery of claim 1, wherein the separator comprises a single layer, or two or more layers.

5. The lithium secondary battery of claim 1, wherein the separator has a pore size of 10 nm or greater and 100 nm or smaller.

6. The lithium secondary battery of claim 1, wherein the silicon-based active material is included in an amount of 60 parts by weight or more on the basis of 100 parts by weight of the negative electrode active material layer composition.

7. The lithium secondary battery of claim 1, wherein the negative electrode conductive material comprises one or more selected from the group consisting of a particulate conductive material, a linear conductive material and a planar conductive material.

8. The lithium secondary battery of claim 1, wherein a surface roughness (Ra) of a surface of the negative electrode active material layer in contact with the separator is 3 um or greater and 10 $\mu$m or less.

9. The lithium secondary battery of claim 1, wherein the negative electrode active material layer has a thickness of 10 um or greater and 100 um or less.

10. The lithium secondary battery of claim 1, wherein the positive electrode comprises one or more selected from the group consisting of $LiNi_xCo_yMn_zO_2$ (x+y+z=1),

$LiNi_aCo_bMn_cAl_dO_2$(a+b+c+d=1), $LiMn_2O_4$, $LiNi_{0.5}Mn_{1.5}O_2$, and
$LiM_xFe_yPO_4$(M: transition metal, x + y = 1).

[Figure 1]

## INTERNATIONAL SEARCH REPORT

| International application No. |
|---|
| **PCT/KR2023/001113** |

**A.    CLASSIFICATION OF SUBJECT MATTER**

**H01M 50/489**(2021.01)i; **H01M 50/449**(2021.01)i; **H01M 10/052**(2010.01)i; **H01M 4/48**(2010.01)i; **H01M 4/38**(2006.01)i; **H01M 4/04**(2006.01)i; **H01M 4/62**(2006.01)i

According to International Patent Classification (IPC) or to both national classification and IPC

**B.    FIELDS SEARCHED**

Minimum documentation searched (classification system followed by classification symbols)

H01M 50/489(2021.01); C08J 5/22(2006.01); H01M 10/04(2006.01); H01M 10/42(2006.01); H01M 2/16(2006.01); H01M 50/40(2021.01); H01M 50/409(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 실리콘(silicon), 분리막(separator), 두께(thickness), 압축성(compressibility), 절연 파괴전압(breakdown voltage)

**C.    DOCUMENTS CONSIDERED TO BE RELEVANT**

| Category* | Citation of document, with indication, where appropriate, of the relevant passages | Relevant to claim No. |
|---|---|---|
| Y | KR 10-2021-0143980 A (LG ENERGY SOLUTION, LTD.) 30 November 2021 (2021-11-30) See paragraphs [0023], [0063]-[0082], [0132] and [0148], claims 3 and 6 and figure 1. | 1-10 |
| Y | KR 10-1958835 B1 (CHEIL INDUSTRIES INC.) 02 July 2019 (2019-07-02) See paragraphs [0025]-[0026] and claim 1. | 1-10 |
| Y | KR 10-2210884 B1 (SAMSUNG SDI CO., LTD.) 02 February 2021 (2021-02-02) See paragraphs [0037] and [0088]. | 1-10 |
| Y | KR 10-2021-0088179 A (LG ENERGY SOLUTION, LTD.) 14 July 2021 (2021-07-14) See paragraph [0081] and figure 2. | 2 |
| A | KR 10-2021-0061137 A (LG ENERGY SOLUTION, LTD.) 27 May 2021 (2021-05-27) See paragraphs [0013]-[0016] and [0126]-[0134] and claim 1. | 1-10 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | "X" | document of particular relevance; the claimed invention cannot be considered novel or cannot be considered to involve an inventive step when the document is taken alone |
| "D" | document cited by the applicant in the international application | | |
| "E" | earlier application or patent but published on or after the international filing date | "Y" | document of particular relevance; the claimed invention cannot be considered to involve an inventive step when the document is combined with one or more other such documents, such combination being obvious to a person skilled in the art |
| "L" | document which may throw doubts on priority claim(s) or which is cited to establish the publication date of another citation or other special reason (as specified) | | |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 May 2023** | **19 May 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/001113**

| Patent document cited in search report | | | Publication date (day/month/year) | Patent family member(s) | | | Publication date (day/month/year) |
|---|---|---|---|---|---|---|---|
| KR | 10-2021-0143980 | A | 30 November 2021 | CN | 115336041 | A | 11 November 2022 |
| | | | | EP | 4109592 | A1 | 28 December 2022 |
| | | | | US | 2023-0117733 | A1 | 20 April 2023 |
| | | | | WO | 2021-235794 | A1 | 25 November 2021 |
| KR | 10-1958835 | B1 | 02 July 2019 | KR | 10-2016-0126961 | A | 02 November 2016 |
| KR | 10-2210884 | B1 | 02 February 2021 | CN | 111954943 | A | 17 November 2020 |
| | | | | EP | 3761399 | A1 | 06 January 2021 |
| | | | | KR | 10-2019-0102572 | A | 04 September 2019 |
| | | | | US | 2021-0005858 | A1 | 07 January 2021 |
| | | | | WO | 2019-164130 | A1 | 29 August 2019 |
| KR | 10-2021-0088179 | A | 14 July 2021 | None | | | |
| KR | 10-2021-0061137 | A | 27 May 2021 | CN | 114651367 | A | 21 June 2022 |
| | | | | EP | 4050721 | A1 | 31 August 2022 |
| | | | | JP | 2023-500544 | A | 06 January 2023 |
| | | | | US | 2022-0393304 | A1 | 08 December 2022 |
| | | | | WO | 2021-101222 | A1 | 27 May 2021 |

Form PCT/ISA/210 (patent family annex) (July 2022)

**EP 4 391 196 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020220012968
- JP 2009080971 A